# EUROPEAN PATENT APPLICATION

(11) **EP 3 971 343 A1**
(43) Date of publication of application: **23.03.2022**
(21) Application number: 20306059.5
(22) Date of filing: 18.09.2020
(51) Int. Cl.: D07B 1/14, H01B 7/04, D07B 1/02, B63B 21/20, B63B 21/50, B63B 35/44

(54) **A MOORING WIRE WITH INTEGRATED CABLE**

(71) Applicant: Nexans, 92400 Courbevoie (FR)
(72) Inventor: AANERUD, Arne Martin, 0661 OSLO (NO)
(74) Representative: Ipsilon

(57) **Abstract**

The present invention relates to a mooring wire for mooring and operation of an offshore structure, the mooring wire comprising at least one electrical conductor, wherein a strain wire is arranged in a center of the mooring wire and an armoring being arranged radially outside the strain wire and the electrical conductor.

The present invention also relates to a method of manufacturing of the mooring wire.

## Description

### FIELD OF THE INVENTION

The present invention relates generally to offshore power generation, and more particularly, to a mooring system for an offshore power generation plant, the mooring system comprising a number of mooring wires with integrated cable.

The present invention relates also to a method of manufacturing a mooring wire, a floating windmill moored with at least one mooring wire and a floating windmill park where at least two electrical conductors of the mooring wires are electrically interconnected to provide a network for transport of electrical power from the windmill park.

### BACKGROUND OF THE INVENTION

Wind energy is a very promising source of renewable energy.

However, as one have experienced environmental problems related with land-based windmills, as well as greater energy potential of wind on the surface of the sea, have led to the study of the deployment of windmills on the water of coastal areas, either by mooring the windmills directly to the seabed, when at shallow depths, or installing them on several different types of floating platforms which are moored at their locations by means of different anchoring systems.

Such floating windmills face technical challenges that are different from both on-land windmills and floating oil and gas platforms.

Different from onshore windmills, a floating offshore windmill requires a platform that provided buoyancy to support the weight of the whole structure. The structure of the platform may then have several cylinder-shaped columns with large diameters. Besides providing buoyancy, the platform combined with the windmill generator should be able to resist dynamic wind, wave and current load, and provide a stable support for power production. Another challenge is the added fatigue damage from wave load, which might be comparable to that due to wind load. This will require a robust structural design of the platform in order to achieve better stability.

Furthermore, the offshore windmills comprise one or more wind turbines mounted on the platform, where the wind turbines include a blade and rotor part mounted at a top of a construction, for instance a tower, and connected to a high voltage power export cable for exporting the electricity generated by the one or more wind turbines.

The types of floating platforms for supporting windmills currently in use or being developed generally stem from platforms already being used within the offshore oil and gas sector, where such platforms have strict requirements and respond to the action of waves with very small movements.

Specifically, and taking into account the basic strategy for achieving proper stability and limited movements of the platforms, the floating platforms can be divided into three groups: platforms stabilized by ballasting, platform mainly stabilized by floatation and platforms mainly stabilized by mooring lines.

When using platforms mainly stabilized by mooring lines, a plurality of tensioned mooring lines will moor and fix the platform to the seabed and practically immobilize it, thus achieving stability for the platform. The disadvantage of this type of stabilization, however, lies in the fact that it requires auxiliary flotation systems during transportation of the platform/windmill and involve complex operations for positioning and fixing the platforms/windmill to the seabed, in addition to the steep costs associated with the installation.

Such mooring lines may be mooring chains, tether lines, poly ropes or the like.

The platforms/windmills are also connected to a plurality of dynamic cables, where the dynamic cables are used to transport electrical current from the windmill.

Such dynamic cables have floating components to enable them to move with the platform. The dynamic cables are continuously subjected to bending and twisting forces, caused by the tidal behavior and behavior of the platform and they are therefore likely to suffer mechanical damage in various sections. As such, the dynamic cable must have excellent mechanical strength.

The dynamic cable, may for instance, comprise one or more conductors, one or more optical fiber cables, where the conductors and optical fiber cables are insulated and shielded, and where a cable armor is arranged around the outer circumference of the dynamic cable.

WO 2017/218118 A1 relates to a method of generating power. An airborne power generating craft is connected to a floating structure using an aloft portion of a tether line. The floating structure is connected to an anchor using an underwater portion of the tether line. The anchor is secured to an underwater floor. Power is generated based on movement of the airborne power generating craft in response to a wind force. The floating structure is connected to an electrical transmission system through at least part of the tether line. The power cable is arranged in the center of the tether line surrounded by insulation and tension elements. The generated power is transmitted to the electrical transmission system.

WO 2016/025038 A1 relates to a water current power generation system, where the system includes at least one or more submerged flotation chambers; one or more submerged induction type power generation units disposed in communication with the one or more submerged flotation chambers; one or more impellers disposed in communication with the one or more submerged induction type power generation units; one or more body frame members disposed in communication with the one or more submerged induction type power generation units; and one or more impeller rotation means disposed in communication with the one or more body frame members. A variety of additional structures useful together, individually or in various combinations with the disclosed system, are also disclosed. Methods of transporting and maintaining the system, or individual components and subsystems thereof, are also disclosed.

Prior art dynamic cables, which is a different technical field than mooring wires, will often be protected by a disproportionally thick outer armoring which not only protects the dynamic cable from shocks and impact, but which is also dimensioned to absorb forces when the dynamic cable is subjected to continuous bending and twisting caused by the behavior of the platform in the ocean.

However, such a construction of the dynamic cable will result in, due to the disproportionally thick armoring, that the dynamic cable will not be effectively cooled, which will lead to a power loss in the cable.

Furthermore, prior art offshore windmills require different anchoring or mooring systems in order to stabilize and/or fixate the offshore windmill to an ocean floor.

There is thus a need for alternatives to today's mooring systems and/or dynamic cables, or at least supplementary solutions for mooring systems and/or dynamic cables.

An object of the present invention is to provide a mooring wire with an integrated cable which from a constructional point of view is simple and robust, and which may be used without the danger of being damaged under various conditions.

It is also an object of the present invention to provide a mooring wire which is cost effective to produce and to use.

A further object of the present invention is to seek to solve one or more of the problems or drawbacks according to prior art.

These objects are achieved with a mooring wire as defined in the independent claims 1 and 7. Advantageous embodiments of the present invention are indicated in the dependent claims.

### SUMMARY OF THE INVENTION

The present invention relates to a mooring wire for mooring and operation of an offshore installation, where the mooring wire comprises at least one electrical conductor, where a strain wire is arranged in center of the mooring device, an armor further being arranged radially outside the strain wire and the at least one electrical conductor.

When a plurality of mooring wires is used to moor an offshore construction to an ocean floor, the mooring wires will be pre-tensioned until they are taut.

By such a taut mooring system the restoring forces are created through axial elastic stretching of the mooring wire rather than geometry changes. The restoring forces are determined by the stiffness and elasticity of the mooring wire. The taut mooring system has a much more linear stiffness than a catenary mooring system that gives the advantage that the offsets under mean load better can be controlled and the total mooring wires tensions are smaller. A further advantage of the taut mooring wire system is the better load sharing between adjacent mooring wires.

Due to the above, the mooring wire according to the present invention is designed or constructed in such a way that the strain wire will be able to absorb 90%-100% of the entire axial load of the mooring wire, while the outer armoring of the mooring wire will primarily contribute to protection of the mooring wire.

The strain wire may be constructed of a metallic material or composite strands or a combination of these.

The use of the centralized strain wire provides for a reduction of the outer armoring, and thereby the thermal insulation of the electrical conductors through the armoring. Being arranged subsea the mooring wire is cooled by the surrounding ocean. Reducing the thermal insulating effect of the armoring will therefore have a positive effect on the cooling of the conductors and thereby the efficiency of the power transport through the mooring wire.

According to one embodiment of the present invention, the mooring wire may further comprise a number of signal cables and/or optical fiber cables.

According to one embodiment of the present invention, the mooring wire may further comprise a tubular element for transport of fluid such as CO₂ or hydrogen.

In one aspect the electrical conductor may be a stranded conductor.

The stranded conductor may comprise a plurality of metallic wires, for example of aluminum, copper, other metals or different alloys, where the metallic wires are bundled or wrapped together to form the stranded conductor.

The stranded conductor may be manufactured in a variety of configurations, where the plurality of metallic wires is bundled or wrapped together to form a bunch stranding configuration, a concentric stranding configuration, an unilay stranding configuration or a rope lay stranding configuration.

Furthermore, the stranded conductor may have a circular cross-section, but it could also be envisaged that the stranded conductor may be manufactured to have other cross-sections, for instance a triangular cross-section, a square cross-section or even a polygonal cross-section.

In one aspect, the electrical conductor may be surrounded by an insulation system, where the insulation system may comprise an inner semiconducting layer, an insulation layer and an outer semiconducting layer. The inner semiconducting layer, the insulation layer and the outer semiconducting layer may be bonded to each other or they may be separate layers that are applied onto the conductor to form an insulation and protection for the conductor.

In one aspect, the electrical conductors, and optional optical fiber cables and optional signal cables may be surrounded by a water barrier system, where the water barrier system will prevent water from entering into the component itself.

In one aspect, the armoring arranged radially outside the mooring wire may be wound around the outer surface of the mooring wire to take up radial stresses in the mooring wire.

The armoring may be made from polypropylene, for instance a PP jacket or PE jacket or the like.

Furthermore, the armoring arranged radially outside the mooring wire may be permeable or semipermeable, such that water can enter into the mooring wire.

The present invention also relates to a method of manufacturing a mooring wire, where the method is comprised of the following steps: providing a strain wire in center of the mooring wire, arranging at least one electrical conductor around the strain wire arranged in the center of the mooring wire, the strain wire, the at least one electrical conductor and optionally one or more optical fiber cables and optionally one or more signal cables forming a core in the mooring line and wrapping an armoring around the core of the mooring wire.

According to one aspect, at least one mooring wire may be used to moor a floating installation to an ocean floor, where the floating installation may be a floating windmill, a solar cell plant or the like.

The present invention also relates to a floating windmill park comprising two or more windmills, where at least two electrical conductors of the mooring wires arranged around the windmills are electrically interconnected to provide a network for transportation of electrical power from the windmills of the windmill park.

### BRIEF DESCRIPTION OF THE DRAWINGS

Other advantages and characteristic features of the present invention will be seen clearly from the following detailed description, the appended figures and the following claims, wherein:
Figure 1 illustrates schematically a cross-sectional view of prior art dynamical cable comprising stranded conductors,
Figure 2 illustrates schematically a permanently moored power generation system according to prior art,
Figure 3 is a cross-sectional view of a mooring wire according to the present invention,
Figure 4 is a schematic illustration of an example application of the mooring wire according to figure 3, and
Figure 5 shows in an exemplary embodiment how the mooring wires are used to moor the windmills of a floating windmill park.

It should be noted that the figures are merely examples and no limitations on the scope of the present disclosure are intended thereby. Further, the figures are generally not drawn to scale, but are drafted for purposes of convenience and clarity in illustrating various aspects of the disclosure.

### DETAILED DESCRIPTION

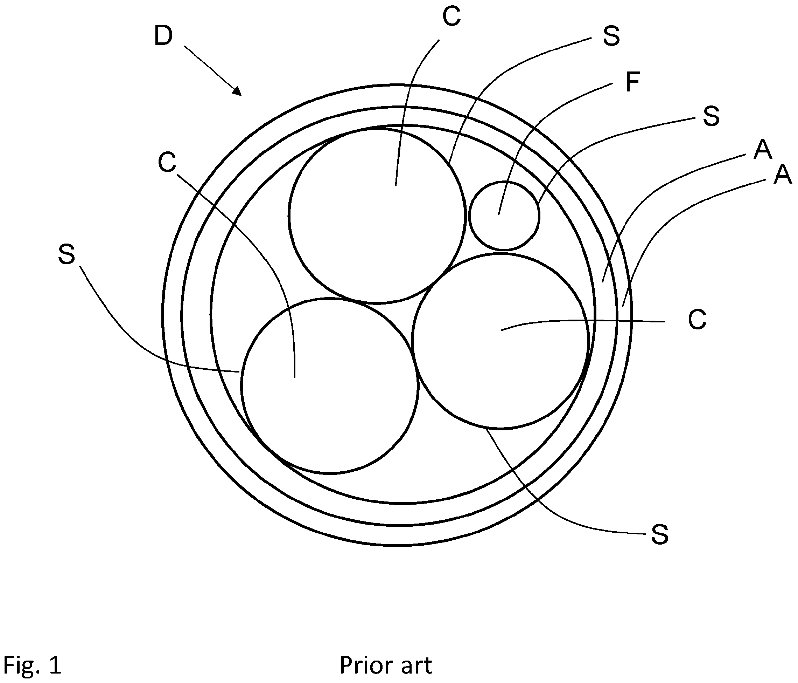

Figure 1 shows in a schematically way and in a cross-section a dynamic cable D according to prior art. The dynamic cable D comprises three conductors C and is suitable for providing a power supply. Each conductor C is surrounded by various sheaths S for insulation and protection of said conductor C. As can be seen, the dynamical cable D comprises also an optical fiber cable F, where also the optical fiber cable F is surrounded by various sheaths S for insulation and protection. A double wire armouring A is arranged around an outer circumference of the dynamic cable D.

The conductors C and the optical fiber cable F are supported within the double wire armouring A, but the conductors C and the optical fiber cable F are not fixed relative each other in order to allow them to be moved relative each other when the dynamic cable D is subjected to bending and twisting forces caused by the tidal behaviour and behaviour of the platform.

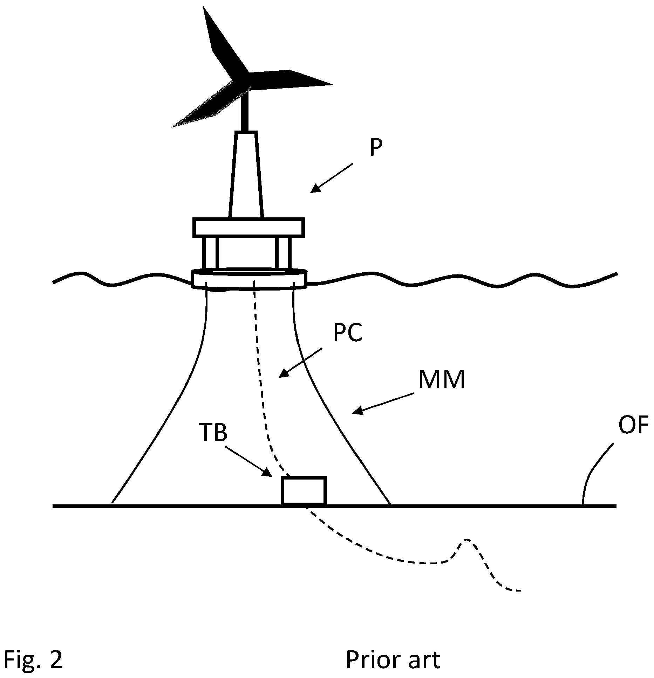

Figure 2 shows a power generation plant P according to prior art, where the power generation plant P is permanently moored to the ocean floor OF using a plurality of strong, secure mooring means MM.

The mooring means MM may, for instance, be thick poly ropes, dynamic cables or mooring chains.

The poly ropes may be firstly wound in one direction and then covered with a second rope wound in the opposite direction, resulting in a combined, alternately wound line which is very strong and resistant to twisting and knotting.

A separate power cable PC is further run from the power generation plant P to a transformer or transmission box TB installed on the ocean floor OF, whereafter the power cable PC is run beneath the ocean floor OF towards its ultimate destination.

The power cable PC may also be run through an interior void of the poly rope or other mooring lines, so that there is only a single line extending from the power generation plant, where the power cable is protected from damage by the mooring lines.

However, the mooring means MM may also be in the form of stranded steel cable mooring lines where a power cable PC is integrated within the center.

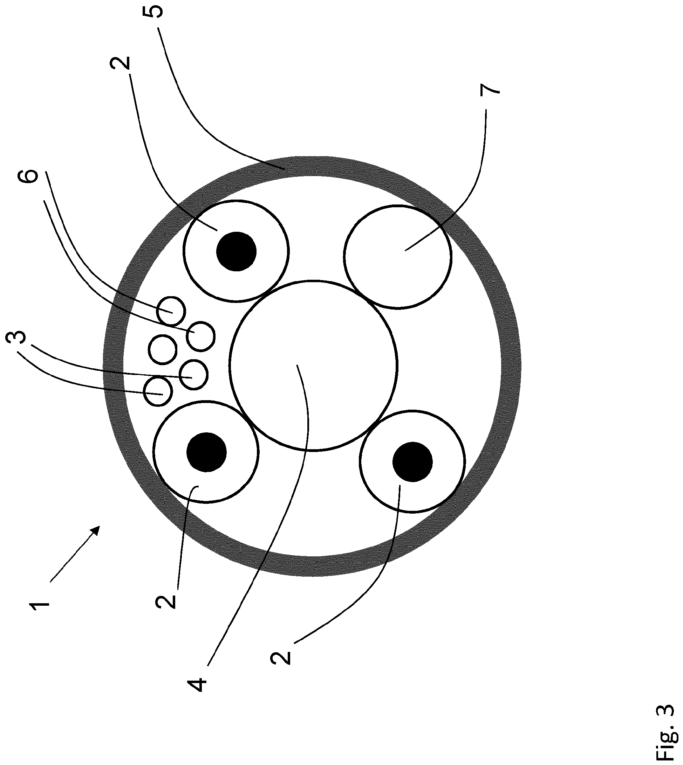

Figure 3 shows a first exemplary embodiment of a mooring wire 1 according to the present invention, where the mooring wire 1 comprises three power phases with conductors 2 and a number of optical fiber cables 3 and signal cables 6.

The fiber optical cables 3 comprises a number of optical fibers covered in individual protective covers and bundled together. The fiber optical cables 3 are used to transfer digital data signals in the form of light.

The signal cables 6 are used to transfer data.

Furthermore, a strain wire 4 is arranged in a center of the mooring wire 1 and an armouring 5 is arranged radially outside the power phase and signal cables of the mooring wire 1.

However, it is to be understood that the mooring wire 1 according to the present invention may comprise other appropriate or suitable functional elements, such as tubular member(s) for transport of fluids such as CO₂ or hydrogen.

For instance, in one embodiment the mooring wire 1 may comprise one tubular member 7 for transport of fluid such as CO₂ or hydrogen, one conductor 2 and a number of optical fiber cables.

In a second exemplary embodiment of the mooring wire 1 according to the present invention, the mooring wire 1 comprises one conductor 2 and a strain wire 4 arranged in the center of the mooring wire 1. An armouring 5 is arranged radially outside the strain wire 4 and the conductor 2.

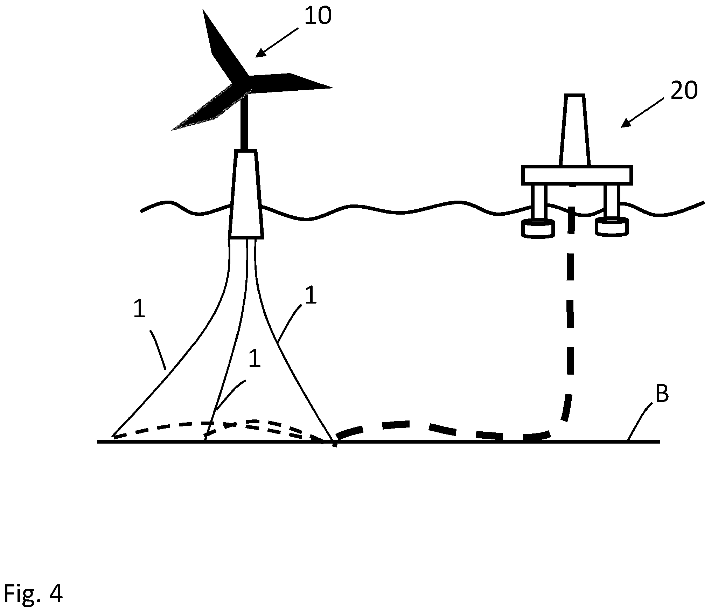

Figure 4 shows in a schematic way an embodiment of three mooring wires 1, where the mooring wires 1 simultaneously are used to transport electrical current from a first installation 10 to a second installation 20.

In this exemplary embodiment, three mooring wires 1 are employed to moor the first installation 10 to a seabed B, the first installation 10 being an energy or power producing plant in form of a windmill installation, and to provide electrical current from the windmill installation to the second installation 20, the second installation may be an oil and gas exploration and production facility.

The oil and gas exploration and production facility 20 comprises a derrick, a hoist system, a circulation system and power system(s), where one or more energy systems for supply of current and fluid are used to operate and run the above-mentioned systems.

The mooring wires 1 may also be used in one or more of the following applications:
- between a first and second installation, where one of the installations is arranged offshore and the other installation is arranged onshore,
- between a plurality of first installations and a second installation, where the first installations are arranged offshore and the second installation is arranged offshore, or
- between a plurality of first installations and a second installation, where the first installations are arranged offshore and the second installation is arranged onshore.

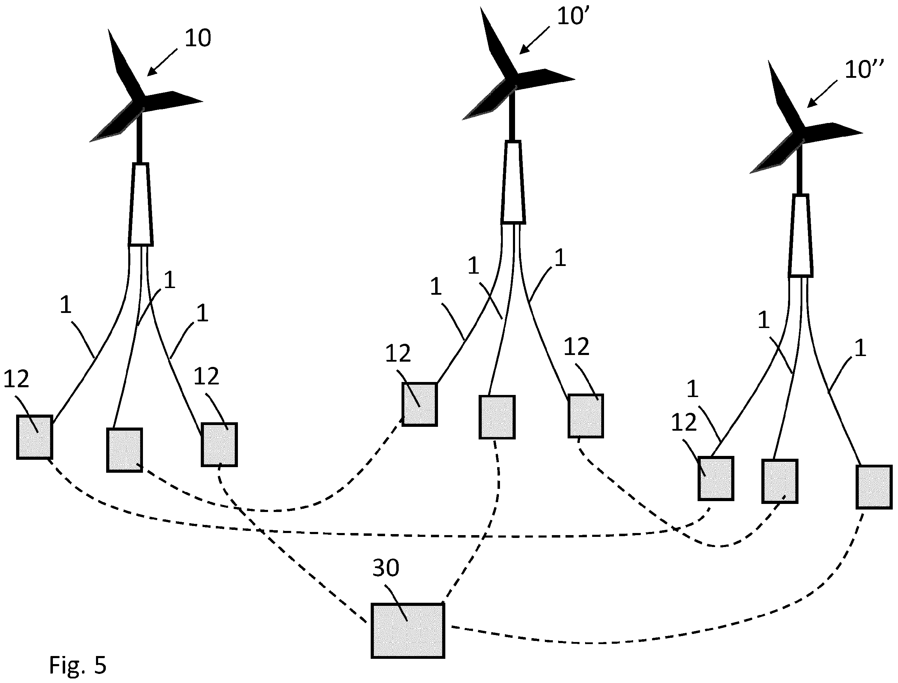

Figure 5 shows a schematic way how windmills 10 in a windmill park may be connected together with a plurality of mooring wires 1 according to the present invention.

In this exemplary embodiment, the floating windmill park comprises three windmills 10, where each windmill 10 is anchored to the ocean floor with three mooring wires 1. The windmills may comprise a three-legged construction.

Each leg of a windmill 10 is then connected to a mooring wire 1, where the mooring wire 1 will extend to an ocean floor in order to be connected to an anchor 12 arranged on the ocean floor.

The windmills 10 are arranged in a "star configuration", but is to be understood that the windmills 10 also could be arranged in other configurations, for instance in line or having different distances between them etc.

One of the mooring wires 1 extending down from one leg of a first windmill 10 may then be extended from its anchor and connected to one leg of an adjacent and second windmill 10', such that this mooring wire 1 is a common mooring wire 1 for the first and second windmills 10.

Similarly, another mooring wire 1 extending from another leg of the first windmill 10 may then be extended from its anchor 12 and connected to one leg of an adjacent and third wind mill 10", such that this mooring wire 1 is a common mooring wire 1 for the first and third windmill 10.

The third and last mooring wire of the first windmill 10 is connected to a transformer 30 or transmission box arranged on the ocean floor.

Similarly, the second windmill 10 will, through one of its mooring wires 1, have a common connection with the first windmill 10, and through its other mooring wire 1 will have a common connection with the third windmill 10. The last mooring wire 1 of the second windmill 10 is connected to the transformer 30 or transmission box arranged on the ocean floor.

The third windmill 10, will, through one of its mooring wires 1, have a common connection to the first windmill 10 and through its other mooring wire 1 will have a common connection with the second windmill 10. The last mooring wire 1 of the third windmill 10 is connected to the transformer 30 or transmission box arranged on the ocean floor.

The transformer 30 or transmission box is then connected to a power cable that will transport the power away from the windmill park.

Through the above arrangement it is obtained that at least two conductors 2 of the mooring wires 1 are electrically interconnected to provide a network of electrical power from the windmills 10, 10', 10".

The invention has now been explained with several non-limiting exemplary embodiments. One skilled in the art will appreciate that a variety of variations and modifications can be made to the mooring wire as described within the scope of the invention as defined in the appended claims.

## Claims

1. A mooring wire (1) for mooring and operation of an offshore installation (01), the mooring wire (1) comprising at least one electrical conductor (2),
**characterized in that** a strain wire (4) is arranged in a center (S) of the mooring wire (1) and an armoring (5) is arranged radially outside the strain wire (4) and the at least one electrical conductor (2).

2. The mooring wire (1) according to claim 1,
wherein the strain wire (4) is made from a metallic material, composite strands or a combination of these.

3. The mooring wire (1) according to claim 1 or 2,
wherein the strain wire (4) is configured to, after being pre-tensioned, provide more than 90%, preferably 100% of the mooring wire's (1) axial strength.

4. The mooring wire (1) according to claim 1,
wherein the mooring wire (1) further comprises a number of signal cables (6) and/or optical fiber cables (3).

5. The mooring wire (1) according to claim 1 and 4,
wherein each electrical conductor (2), optical fiber cable (3) and signal cable (6) is surrounded by a water barrier system preventing water from entering into the component itself.

6. The mooring wire (1) according to any one of the proceeding claims,
wherein the mooring wire (1) further comprises a tubular element (7) for transfer of a fluid such as CO₂ or hydrogen.

7. The mooring wire (1) according to claim 1,
wherein the electrical conductor (2) is a stranded conductor comprising a number of metallic wires, the metallic wires being bundled or wrapped together to form a bunch stranding, a concentric stranding, an unilay stranding or a rope lay stranding.

8. The mooring wire (1) according to claim 5,
wherein the metallic wires are made from aluminum, copper, other metals or a combination thereof.

9. The mooring wire (1) according to claim 1,
wherein the armoring (5) is wounded around an outer surface of the mooring wire (1) to take up radial stresses.

10. A floating windmill (10) moored with at least one mooring wire (1) according to any of the preceding claims 1-10.

11. The floating windmill (10) according to claim 10,
wherein the strain wire (4) is configured to, after being pre-tensioned, provide more than 90%, preferably 100% of the mooring wire's (1) axial strength.

12. A floating windmill park comprising two or more floating windmills (10, 10', 10") according to claim 10, **characterized in that** at least at least two electrical conductors (2) of the mooring wires (1) are electrically interconnected to provide a network for transport of electrical power from the windmills (10,10',10") of the windmill park.

13. A method of manufacturing of a mooring wire (1),
**characterized in that** the method comprises the following steps: providing a strain wire (4) in center (S) of the mooring wire (1), arranging at least one electrical conductor (2) around the strain wire (4) in center (S) of the mooring wire (1), wherein the strain wire (4) and the at least one electrical conductor (2) form a core in the mooring wire (1) and wrapping an armoring (5) around the core of the mooring wire (1).
